# EUROPÄISCHE PATENTSCHRIFT

(11) **EP 4 021 972 B1**
(45) Veröffentlichungstag und Bekanntmachung des Hinweises auf die Patenterteilung: **11.10.2023**
(21) Anmeldenummer: 20758234.7
(22) Anmeldetag: 24.08.2020
(51) Int. Cl.: C08L 7/00, C08L 13/00, C08K 5/17, C08K 3/04, C08K 5/205, C08K 5/31, C08L 21/00, C08K 5/00

(54) **MISCHUNGEN ENTHALTEND EINEN AMINISCH VERNETZBAREN KAUTSCHUK UND POLYETHYLENIMIN**
MIXTURES COMPRISING AN AMINICALLY CROSS-LINKABLE RUBBER AND POLYETHYLENE IMIDES
MÉLANGES CONTENANT UN CAOUTCHOUC POUVANT ÊTRE RÉTICULÉ PAR UNE AMINE ET DE LA POLYÉTHYLÈNIMINE

(30) Priorität: 30.08.2019 EP 19194660; 16.04.2020 EP 20169886
(43) Veröffentlichungstag der Anmeldung: 06.07.2022
(73) Patentinhaber: LANXESS Deutschland GmbH, 50569 Köln (DE)
(72) Erfinder: MEENENGA, Vincenza, 68723 Oftersheim (DE); OPRISONI, Cristian, 68723 Oftersheim (DE)
(86) Internationale Anmeldenummer: PCT/EP2020/073638
(87) Internationale Veröffentlichungsnummer: WO 2021/037801

(56) Entgegenhaltungen:
- WO-A1-2016/030469
- US-A- 3 867 326
- US-A- 3 994 742

## Beschreibung

Die Erfindung betrifft Mischungen enthaltend mindestens einen aminisch vernetzbaren Kautschuk und ein Vernetzungssystem, welches aus mindestens einem Vernetzer und optional mindestens einem Vulkanisationsbeschleuniger besteht, wobei der mindestens eine Vernetzer Polyethylenimin enthält, deren Herstellung und Verwendung, sowie die aus der Mischung erhältlichen Vulkanisate, insbesondere in Form von Kautschukartikeln, insbesondere Dichtungen, Schläuche, Membranen und O-Ringe.

Die Nachfrage nach besonders widerstandsfähigen Materialien im Bereich der Automobile und industriellen Anwendungen ist aufgrund der sich vergrößernden Anwendungsgebiete groß. Kautschuke wie beispielsweise Polyacrylat- (ACM) und Ethylenacrylat- (AEM)-Kautschuke sind wichtige Klassen von Polymeren, die sich durch hohe Wärmebeständigkeit und Beständigkeit gegenüber Chemikalien auszeichnen.

Die Vernetzung dieser Kautschuke erfolgt üblicherweise mit einem Vernetzungssystem, welches einen Vernetzer und einen Vulkanisationsbeschleuniger enthält. Als Vernetzer werden häufig Diamine eingesetzt, wie z.B. Hexamethylendiamin (HMD), auch in seiner reaktionsverzögernden Form als geblocktes Diamincarbamat (HMDC), aus dem sich das Diamin erst durch Temperatureinwirkung bildet, und als Vulkanisationsbeschleuniger werden häufig Amidine verwendet. Die erhältlichen Vulkanisate weisen zwar einen guten Druckverformungsrest auf, die An(Scorch)-Vulkanisationszeit ist jedoch kurz, und die Vulkanisationseigenschaften sind schlecht.

Zu den bekanntesten Vulkanisationsbeschleunigern in Vernetzungssystemen von Kautschuken wie beispielsweise ACM- und AEM-Kautschuken zählen die Guanidin-haltigen Vulkanisationsbeschleuniger. Sie sind langsam wirkende Beschleuniger, mit denen die An(Scorch)- und/oder Ausvulkanisationszeit angepasst werden kann.

Die Guanidin-haltigen Vulkanisationsbeschleuniger, insbesondere Diphenylguanidin (DPG), Diorthotolylguanidin (DOTG) und 1-(ortho-Tolyl)biguanid, erlauben aber nicht nur eine Einstellung des Vulkanisationsverhaltens, sondern verbessern gleichzeitig auch verschiedene wichtige Stoffeigenschaften der Kautschukmischung, insbesondere die Mooney Viskosität und die Stoffeigenschaften des daraus erhaltenen Vulkanisats, wie z.B. die Zugfestigkeit, den Druckverformungsrest und die Zugspannungswerte bei verschiedener Dehnung.

Es ist dem Fachmann bekannt, dass Guanidin-haltige Vulkanisationsbeschleuniger unter Vulkanisationsbedingungen volatile organische Aminverbindungen freisetzen. Beispielsweise spaltet der in der Praxis meistverbreitete Vulkanisationsbeschleuniger, das DPG, bei der Vulkanisation Anilin ab. Das ebenfalls häufig verwendete DOTG spaltet während der Vulkanisation o-Toluidin ab, welches im Tierversuch und beim Menschen krebserregend wirkt. Darüber hinaus wird es in den Produkten sowie in der Luft konzentriert. Somit ist es nur eine Frage der Zeit, wann DOTG in der Industrie, insbesondere der Automobilindustrie, verboten wird.

Als Alternativen für diese Beschleuniger wurden auch tertiäre Amine vorgeschlagen wie zum Beispiel 1,8-Diazabicyclo-5,4-undec-7-ene (DBU), das jedoch keine gleichwertige Alternative darstellt, da sich schlechtere elastische Eigenschaften der unvernetzten und vernetzen Elastomere ergeben. Insbesondere leiden der Vernetzungsgrad und die Zugfestigkeit.

Mit dem Bestreben, die Emission dieser organischen Amine zu vermeiden, besteht Bedarf an neuen Vernetzungssystemen für Kautschuke wie beispielsweise ACM- und AEM-Kautschuken.

In WO2016030469A1 werden im Wesentlichen DPG-freie Kautschukmischungen offenbart, die Polyethylenimin enthalten. Das hier offenbarte Vernetzungssystem enthält Schwefel als Vernetzer und dient der Vernetzung von einer gänzlich anderen Kautschukklasse, nämlich den unpolaren Kautschuken wie Naturkautschuk (NR) oder den unpolaren Synthesekautschuken wie Polybutadien (BR) und Styrol/Butadien-Copolymerisaten (SBR), welche sich aufgrund ihre Doppelbindungen gut mit Schwefel oder auch mit Peroxiden vernetzen lassen. Im Gegensatz dazu werden Kautschuke wie beispielsweise ACM und AEM jedoch in der Regel diaminisch vernetzt, beispielsweise mit HMDC.

In EP2033989A1 und EP2292687A1 werden ACM- und AEM-Kautschuke mit HMDC und einem Benzothiazol-Derivat wie DBU vernetzt. Dem Fachmann ist allerdings bekannt, dass durch die Reaktion von HMDC und DBU Substanzen entstehen, die eine sehr starke Geruchsbelästigung verursachen. DBU ist zudem als giftig eingestuft.

Der vorliegenden Erfindung liegt die Aufgabe zugrunde, toxikologisch weniger bedenkliche und bei der Vulkanisation weniger, bevorzugt keine, volatilen organischen Amine freisetzende Kautschukmischungen bereitzustellen, bei denen die anwendungsrelevanten Eigenschaften, d.h. der Vernetzungsgrad, die Anvulkanisationszeit T10, die Ausvulkanisationszeit T90, die Zugfestigkeit, Modul 20, 50 und 100 und der Druckverformungsrest der daraus erhältlichen Vulkanisate etwa gleich gut bzw. vorzugsweise besser als bei den entsprechenden Guanidin-haltigen Mischungen bzw. Vulkanisaten, insbesondere als bei den Di-ortho-tolyl-guanidin (DOTG)-haltigen Mischungen bzw. Vulkanisaten, sind. Insbesondere ist es das Ziel, bei gleichbleibender Anvulkanisationszeit T10 eine Erhöhung des Vernetzungsgrades und eine Verbesserung von Zugfestigkeit sowie von Modul 20, 50 und 100 zu erreichen.

Auch ist es wünschenswert, Kautschukmischungen bereitzustellen, die vorzugsweise eine einfache Handhabung ermöglichen und einfach und sicher herstellbar sind. Dafür ist es von Vorteil, ein Vernetzungssystem, das aus möglichst wenigen Komponenten, bevorzugt aus nur einer Komponente, besteht, das bevorzugt die zuvor genannten Eigenschaften hervorbringt, einzusetzen.

Überraschend wurde nun gefunden, dass die Vulkanisation einer Mischung enthaltend
- mindestens einen aminisch vernetzbaren Kautschuk und
- ein Vernetzungssystem, welches aus mindestens einem Vernetzer und optional mindestens einem Vulkanisationsbeschleuniger besteht, wobei der mindestens eine Vernetzer Polyethylenimin enthält, und wobei der Gesamtgehalt der Vulkanisationsbeschleuniger Diphenylguanidin (DPG), Di-ortho-tolyl-guanidin (DOTG) und 1-(ortho-Tolyl)biguanid des Vernetzungssystems in der Mischung maximal 0,4 phr, bevorzugt maximal 0,2 phr, besonders bevorzugt maximal 0,1 phr und ganz besonders bevorzugt maximal 0,01 phr beträgt,
zu einer Mischung führt, die etwa gleichbleibende An- und Ausvulkanisationszeiten T10 bzw. T90 aufweist, wobei das daraus erhältliche Vulkanisat hinsichtlich Vernetzungsgrad, Modul 20, 50 und 100, Zugfestigkeit und Druckverformungsrest gleiche oder bessere Werte aufweist, im Vergleich zu Guanidin- oder DBU-haltigen Vulkanisaten.

Die Einheit phr (parts per hundred rubber) steht dabei und auch im Folgenden für Gewichtsteile bezogen auf 100 Gewichtsteile an in der erfindungsgemäßen Mischung eingesetztem Kautschuk.

Ein weiterer Gegenstand der vorliegenden Erfindung ist ein Verfahren zur Herstellung der erfindungsgemäßen Mischung, bei welchem der mindestens eine aminisch vernetzbare Kautschuk, der mindestens eine Vernetzer und optional der mindestens eine Vulkanisationsbeschleuniger gemischt werden.

Bevorzugt werden in einem ersten Schritt der mindestens eine Vernetzer und optional der mindestens eine Vulkanisationsbeschleuniger gemischt, und in einem zweiten Schritt der mindestens eine aminisch vernetzbare Kautschuk, besonders bevorzugt schrittweise, zu der Mischung erhalten nach dem ersten Schritt, gefügt.

Bevorzugt erfolgt das Mischen der Komponenten zur Herstellung der erfindungsgemäßen Mischung in einem Kneter.

Die Zugabe des mindestens einen Vernetzers kann zu jedem Zeitpunkt des Mischens erfolgen.

Bevorzugt erfolgt das Mischen der Komponenten zur Herstellung der erfindungsgemäßen Mischung bei einer Temperatur zwischen 20 und 150 °C, besonders bevorzugt bei einer Temperatur zwischen 40 °C und kleiner als 100 °C, ganz besonders bevorzugt bei einer Temperatur zwischen 45 und 60 °C.

Bevorzugt erfolgt das Mischen über einen Zeitraum von 2-120 min, besonders bevorzugt von 5-60 min, ganz besonders bevorzugt von 5-20 min.

In der Regel wird die erfindungsgemäße Mischung vor einer weiteren Verarbeitung wie beispielsweise der Vulkanisation ausgewalzt, bevorzugt mittels einer temperierten Walze. Bevorzugt liegt die Temperatur der Walze unter 150 °C, besonders bevorzugt unter 100 °C, ganz besonders bevorzugt unter 50 °C, ganz ganz besonders bevorzugt zwischen 15 und 30 °C.

Besonders geeignet sind die erfindungsgemäßen Mischungen für die Herstellung von Kautschukartikeln, insbesondere Dichtungen, Schläuchen, Membranen und O-Ringen.

Die erfindungsgemäßen Mischungen können anschließend in üblicher Weise vulkanisiert werden.

Ein weiterer Gegenstand der vorliegenden Erfindung ist ein Verfahren zur Herstellung von Kautschukvulkanisaten, bei welchem die erfindungsgemäße Kautschukmischung bei einer Temperatur von 100 - 280 °C, bevorzugt 150 - 210 °C, erhitzt wird.

Die Vulkanisation kann bei einem beliebigen Druck erfolgen. Bevorzugt erfolgt die Vulkanisation bei einem Druck von 100 - 500 bar, besonders bevorzugt bei einem Druck von 200 - 400 bar, ganz besonders bevorzugt bei einem Druck von 250 - 350 bar.

Nach erfolgter Vulkanisation werden die erhaltenen Vulkanisate bevorzugt getempert, besonders bevorzugt bei einer Temperatur von 160 - 220 °C, ganz besonders bevorzugt von 170 - 180 °C, und bevorzugt für 1 - 10 Stunde(n), besonders bevorzugt für 2 - 6 Stunden.

Bevorzugt erfolgt das Tempern in einem Ofen.

Ein weiterer Gegenstand der vorliegenden Erfindung sind Vulkanisate erhältlich durch die Vulkanisation der erfindungsgemäßen Mischung.

Die hergestellten Vulkanisate sind insbesondere Kautschukartikel, insbesondere Dichtungen, Schläuche, Membranen und O-Ringe.

Ein weiterer Gegenstand der vorliegenden Erfindung ist die Verwendung von Polyethylenimin zur Herstellung der erfindungsgemäßen Kautschukmischungen, Vulkanisate und/oder Kautschukartikel.

Ein weiterer Gegenstand der vorliegenden Erfindung ist die Verwendung eines Vernetzungssystems, bestehend aus mindestens einem Vernetzer und optional mindestens einem Vulkanisationsbeschleuniger, zur Vernetzung mindestens eines aminisch vernetzbaren Kautschuks.

Bevorzugt besteht dieses Vernetzungssystem zu ≥ 80 Gew.-%, bevorzugt zu ≥ 90 Gew.- %, besonders bevorzugt zu ≥ 95 Gew.-%, ganz besonders bevorzugt zu ≥ 99 Gew.-%, bezogen auf die Gesamtmasse des Vernetzungssystems, aus mindestens einem Vernetzer, wobei der mindestens eine Vernetzer Polyethylenimin und optional mindestens ein Diamin, bevorzugt ausgewählt aus der Gruppe bestehend aus Hexamethylendiamin (HMD) und Hexamethylendiamincarbamat (HMDC), enthält und der Gesamtgehalt der Vulkanisationsbeschleuniger Diphenylguanidin (DPG), Di-ortho-tolyl-guanidin (DOTG) und 1-(ortho-Tolyl)biguanid des Vernetzungssystems maximal 0,4 phr, bevorzugt maximal 0,2 phr, besonders bevorzugt maximal 0,1 phr und ganz besonders bevorzugt maximal 0,01 phr beträgt, bezogen auf den mindestens einen aminisch vernetzbaren Kautschuk.

Die für die in der erfindungsgemäßen Mischung enthaltenen Komponenten, wie den mindestens einen aminisch vernetzbaren Kautschuk, den mindestens einen Vernetzer und den optionalen mindestens einen Vulkanisationsbeschleuniger, angeführten Beschreibungen und Vorzugsbereiche gelten für die Verwendung des Vernetzungssystems analog.

### Kautschuk

Die erfindungsgemäße Mischung enthält mindestens einen aminisch vernetzbaren Kautschuk.

Der mindestens eine aminisch vernetzbare Kautschuk ist ein Kautschuk mit einer besonders polaren Stelle, bevorzugt ein Carboxylgruppen-haltiger Kautschuk.

Bevorzugte Carboxylgruppen-haltige Kautschuke sind ACM- und AEM-Kautschuke.

Der mindestens eine aminisch vernetzbare Kautschuk ist besonders bevorzugt ausgewählt aus der Gruppe bestehend aus ACM- und AEM-Kautschuken.

In einer bevorzugten Ausführungsform ist der mindestens eine aminisch vernetzbare Kautschuk ein ACM-Kautschuk.

In einer alternativen bevorzugten Ausführungsform ist der mindestens eine aminisch vernetzbare Kautschuk ein AEM-Kautschuk.

Die erfindungsgemäße Mischung enthält bevorzugt 40-80 Gew.-% des mindestens einen aminisch vernetzbaren Kautschuks, besonders bevorzugt 50-70 Gew.-%, bezogen auf das Gesamtgewicht der Kautschukmischung.

### ACM-Kautschuke

ACM-Kautschuke sind im Allgemeinen Polymere, die Acrylat und ein Monomer mit einer Vernetzungsstelle enthalten, wie beispielsweise ein Carboxylgruppen-haltiges Monomer, ein Chlor-haltiges Monomer oder ein Epoxy-haltiges Monomer, oder Kombination aus vorstehenden Monomeren.

Im Rahmen der vorliegenden Anmeldung sind ACM-Kautschuke Polymere, die Acrylat und ein Carboxylgruppen-haltiges-Monomer als Monomere enthalten.

Bevorzugte ACM-Kautschuke sind Copolymere aus Acrylat und einem Carboxylgruppen-haltigen Monomer.

Besonders bevorzugte ACM-Kautschuke leiten sich von Acrylaten wie Alkyl-Acrylat-Monomeren ab oder einer Kombination eines Alkyl-Acrylat-Monomeren mit einem Alkoxyalkyl-Acrylat-Monomeren. Die Kombination eines Alkyl-Acrylat-Monomeren mit einem Alkoxyalkyl-Acrylat-Monomeren ist ganz besonders bevorzugt.

Das Alkyl-Acrylat-Monomer weist bevorzugte eine Alkyl-Gruppe mit 1 bis 8 C-Atomen auf, und ist besonders bevorzugt ausgewählt aus der Gruppe bestehend aus Methylacrylat, Ethylacrylat, n-Propylacrylat, n-Butylacrylat, iso-Propylacrylat, iso-Butylacrylat, n-Hexylacrylat, 2-Ethylhexylacrylat und Cyclohexylacrylat. Ganz besonders bevorzugt sind Ethylacrylat und n-Butylacrylat.

Sofern eine Kombination eines Alkyl-Acrylat-Monomeren mit einem Alkoxyalkyl-Acrylat-Monomeren eingesetzt wird, ist die Menge der Alkyl-Acrylat-Einheiten bevorzugt 30 - 90 Gew.-%, besonders bevorzugt 40-89 Gew.-%, ganz besonders bevorzugt 45 - 88 Gew.- %, bezogen auf die Gesamtmasse der Kombination aus Alkyl-Acrylat-Monomeren mit einem Alkoxyalkyl-Acrylat-Monomeren.

Die Menge an Acrylat in einem ACM-Kautschuk ist bevorzugt 90 - 99.9%. besonders bevorzugt 92.5 - 99.7 Gew.-% und ganz besonders bevorzugt 95-99.5 Gew.-%, bezogen auf die Gesamtmasse des ACM-Kautschuks.

Bevorzugt ist das Carboxylgruppen-haltige Monomer des ACM-Kautschuks ausgewählt aus der Gruppe bestehend aus Carboxylsäure-Monomeren wie Acrylsäure, Methacrylsäure, Itaconsäure, Maleinsäure, Fumarsäure und Citraconsäure, Butendisäuremonoalkylestern wie Monomethylmaleat, Monoethylmaleat, Mono-n-butyl-maleate, Monomethylfumarat, Monoethylfumarat und Mono-n-butyl-fumarat. Die Carboxylgruppe kann auch eine Carboxylsäureanhydrid-Gruppe sein, und folglich kann das Carboxylgruppen-haltigen Monomer beispielsweise auch Maleinsäureanhydrid oder Citraconsäureanhydrid sein. Besonders bevorzugt ist das Carboxylgruppen-haltige Monomer des ACM-Kautschuks ein Butendisäure-monoalkylester, ganz besonders bevorzugt ausgewählt aus der Gruppe bestehend aus Monoethylmaleat, Mono-n-butyl-maleate, Monoethylfumarat und Mono-n-butyl-fumarat.

Die Menge an Carboxylgruppen-haltigen Monomer in einem ACM-Kautschuk ist bevorzugt 0.1 - 10 Gew.-%. besonders bevorzugt 0.3 - 7.5 Gew.-% und ganz besonders bevorzugt 0.5 - 5 Gew.-%, bezogen auf die Gesamtmasse des ACM-Kautschuks.

Der ACM-Kautschuk kann auch noch weitere optionale Monomere zu einer Menge von 0 - 30 Gew.-%, bezogen auf die Gesamtmasse des ACM-Kautschuks, enthalten. Diese optionalen Monomere können beispielsweise konjugierte Dien Monomere, nichtkonjugierte Dien Monomere, aromatische Vinyl Monomere, α-,β-ethylenisch ungesättigte Nitril Monomere, Amidgruppen-haltige Acryl- oder Methacryl Monomere, polyfunktionelle Diacryl- oder Dimethacryl Monomere und aliphatische Vinyl Monomere sein.

Beispiele für ACM-Kautschuke sind Nipol^{®} und HyTemp^{®} (Zeon), Noxtite^{®} von Unimatec sowie ACM-Kautschuke namens Racrester^{™}, insbesondere Racrester^{™} CH, von Osaka Soda Co. Ltd. Bevorzugt ist Racrester^{™} CH von Osaka Soda Co. Ltd.

### AEM-Kautschuke

AEM-Kautschuke sind Polymere, die Acrylat, Ethylen und ein Carboxylgruppen-haltiges-Monomer als Monomere enthalten.

Bevorzugte AEM-Kautschuke sind Copolymere aus Acrylat, Ethylen und einem Carboxylgruppen-haltigen Monomer.

Besonders bevorzugt ist das Acrylat in dem AEM-Kautschuk ausgewählt aus der Gruppe bestehend aus Methylacrylat und Ethylacrylat, ganz besonders bevorzugt Methylacrylat.

Für das Carboxylgruppen-haltige Monomer des AEM-Kautschuks gelten die gleichen Ausführungen und Vorzugsangaben wie für das Carboxylgruppen-haltige Monomer des oben beschriebenen ACM-Kautschuks. Ganz besonders bevorzugt als Carboxylgruppen-haltiges Monomer des AEM-Kautschuks ist Butendisäure-monoalkylester (CAS-Nr. 3052-50-4).

Ein Beispiel für AEM-Kautschuke ist VAMAC^{®} (DuPont). Ein bevorzugter AEM-Kautschuk ist VAMAC^{®} G. Wie in EP1499670A2 offenbart, ist VAMAC^{®} G ein Terpolymer, welches als Monomere Ethylen, Methylacrylat und Methylhydrogenmaleat (entspricht Butendisäure-monoalkylester, CAS-Nr. 3052-50-4) enthält. Das Terpolymer enthält 41 Gew.-% Ethylen, 55 Gew.-% Mathylacrylat und 4 Gew-% Methylhydrogenmaleat.

### Vernetzungssystem

Die erfindungsgemäße Mischung enthält ein Vernetzungssystem, welches aus mindestens einem Vernetzer und optional mindestens einem Vulkanisationsbeschleuniger besteht, wobei der mindestens eine Vernetzer Polyethylenimin enthält.

Bevorzugt besteht das Vernetzungssystem zu ≥ 80 Gew.-%, bevorzugt zu ≥ 90 Gew.-%, besonders bevorzugt zu ≥ 95 Gew.-%, ganz besonders bevorzugt zu ≥ 99 Gew.-%, bezogen auf die Gesamtmasse des Vernetzungssystems, aus mindestens einem Vernetzer, wobei der mindestens eine Vernetzer Polyethylenimin enthält.

Bevorzugt besteht das Vernetzungssystem zu ≥ 80 Gew.-%, bevorzugt zu ≥ 90 Gew.-%, besonders bevorzugt zu ≥ 95 Gew.-%, ganz besonders bevorzugt zu ≥ 99 Gew.-%, bezogen auf die Gesamtmasse des Vernetzungssystems, aus mindestens einem Vernetzer, wobei der mindestens eine Vernetzer Polyethylenimin und optional mindestens ein Diamin enthält.

Besonders bevorzugt besteht das Vernetzungssystem zu ≥ 80 Gew.-%, bevorzugt zu ≥ 90 Gew.-%, besonders bevorzugt zu ≥ 95 Gew.-%, ganz besonders bevorzugt zu ≥ 99 Gew.- %, bezogen auf die Gesamtmasse des Vernetzungssystems, aus mindestens einem Vernetzer, wobei der mindestens eine Vernetzer aus Polyethylenimin und optional mindestens einem Diamin besteht.

Meist bevorzugt enthält das Vernetzungssystem der erfindungsgemäßen Mischung keine anderen Vernetzer als Polyethylenimin und optional mindestens ein Diamin.

Zur Klarstellung wird erwähnt, dass die erfindungsgemäße Mischung die nachstehend genannten Vernetzer und optionalen Vulkanisationsbeschleuniger ausschließlich in dem Vernetzungssystem enthält. Vernetzer und optional Vulkanisationsbeschleuniger können folglich nicht außerhalb des Vernetzungssystems in der erfindungsgemäßen Mischung zugegen sein.

Der Begriff "Vernetzungssystem" bedeutet nicht, dass zwischen Vernetzer und optionalem Vulkanisationsbeschleuniger ein struktureller oder räumlicher Zusammenhang bestehen muss oder dass die Bestandteile des Vernetzungssystems in der Herstellung der erfindungsgemäßen Mischung gar in Form einer Mischung eingesetzt werden müssen.

Bevorzugt enthält die erfindungsgemäße Mischung keine anderen Vernetzer und Vulkanisationsbeschleuniger als die in dem Vernetzungssystem enthaltenen mindestens einen Vernetzer und optional mindestens einen Vulkanisationsbeschleuniger.

### Vernetzer

In Sinne der vorliegenden Erfindung sind unter Vernetzern Verbindungen zu verstehen, welche fähig sind, durch chemische Reaktionen mit den Kautschukmolekülen diese zu vernetzen und dabei ein dreidimensionales Netzwerk aus Kautschukmolekülen herzustellen.

Der Ausdruck Polyethylenimin (PEI) ist im Kontext der vorliegenden Erfindung als Homopolymer(e) des Ethylenimins bzw. Copolymer(e) von Ethylenimin und einem oder mehreren Comonomeren zu verstehen, wobei bei den Copolymeren der Anteil der von Ethylenimin abstammenden Wiederholungeinheiten jeweils bezogen auf die Gesamtmasse des Polymers mindestens 50 Gew.-%, bevorzugt mindestens 80 Gew.-%, weiter bevorzugt mindestens 90 Gew.-%, besonders bevorzugt mindestens 95 Gew.-%, und ganz besonders bevorzugt mindestens 98 Gew.-% beträgt. Der Ausdruck Polyethylenimin umfasst dabei auch Mischungen von Homo- und/oder Copolymeren des Ethylenimins beispielsweise mit verschiedenen Molekulargewichten, Verzweigungsgraden, Comonomeren usw. Daher kann das Polyethylenimin verzweigt sein oder linear sein. Auch Mischungen von linearem und verzweigtem Polyethylenimin sind verwendbar.

In einer bevorzugten Ausführungsform ist das Polyethylenimin verzweigt. Besonders bevorzugt weist das Polyethylenimin primäre, sekundäre und tertiäre Aminogruppen auf.

Besonders bevorzugt wird das verzweigte Polyethylenimin hergestellt durch Polymerisation von Aziridinen. Diese ist beispielsweise in Houben-Weyl, Methoden der Organischen Chemie, Band E20, S. 1482-1487, Georg Thieme Verlag Stuttgart, 1987 besch rieben.

Auch kann die Ethylenimin-Einheit des Polyethylenimins an einem oder beiden Kohlenstoffatomen alkyliert sein, bevorzugt mit C₁-C₂₀-Alkyl, besonders bevorzugt mit C₁-C₁₀-Alkyl.

Typischerweise haben solche Homo- oder Copolymere ein gewichtsgemitteltes Molekulargewicht Mw größer 200, bevorzugt von 300 bis 3.000.000, besonders bevorzugt von 400 bis 800.000, ganz besonders bevorzugt von 500 bis 100.000, weiter bevorzugt von 600 bis 30.000 und meist bevorzugt von 700 bis 7.000.

Besonders bevorzugt ist das in der vorliegenden Erfindung verwendbare Polyethylenimin dasjenige gemäß CAS-Nummer 25987-06-8.

Erfindungsgemäße Mischungen enthalten bevorzugt von 0,001 bis 20 phr, besonders bevorzugt von 0,01 bis 10 phr, ganz besonders bevorzugt von 0,1 bis 5 phr, ganz ganz besonders bevorzugt von 0,2 bis 2 phr Polyethylenimin.

Ein einer bevorzugten Ausführungsform enthält der mindestens eine Vernetzer Polyethylenimin und mindestens ein Diamin.

Im Sinne der vorliegenden Erfindung ist unter Diamin eine Verbindung mit zwei Aminogruppen zu verstehen. Auch die reaktionsverzögernde Form eines Diamins als geblocktes Diamincarbamat ist im Sinne der vorliegenden Erfindung als Diamin zu verstehen. Bevorzugt ist ein Diamin im Sinne der vorliegenden Erfindung eine Verbindung, die zwei und nicht mehr als zwei Aminogruppen aufweist.

Erfindungsgemäße Mischungen enthalten bevorzugt von 0 bis 10 phr, besonders bevorzugt von 0 bis 5 phr, ganz besonders bevorzugt von 0 bis 3 phr mindestens eines Diamins.

Ein einer bevorzugten Ausführungsform enthält der mindestens eine Vernetzer Polyethylenimin und mindestens ein Diamin ausgewählt aus der Gruppe bestehend aus Hexamethylendiamin (HMD) und Hexamethylendiamincarbamat (HMDC).

Erfindungsgemäße Mischungen, in denen der mindestens eine Vernetzer Polyethylenimin enthält sowie mindestens ein Diamin, enthalten bevorzugt von 0,01 bis 10 phr, besonders bevorzugt von 0,1 bis 5 phr, ganz besonders bevorzugt von 0,15 bis 1,2 phr Polyethylenimin.

Diese Mischungen enthalten zudem bevorzugt von 0,01 bis 5 phr, besonders bevorzugt von 0,1 bis 3 phr mindestens eines Diamins, bevorzugt ausgewählt aus der Gruppe bestehend aus Hexamethylendiamin (HMD) und Hexamethylendiamincarbamat (HMDC).

### Vernetzer bestehend aus Polyethylenimin und Diamin

In einer bevorzugten Ausführungsform besteht der mindestens eine Vernetzer aus Polyethylenimin und mindestens einem Diamin.

Bevorzugt ist das mindestens eine Diamin ausgewählt aus der Gruppe bestehend aus Hexamethylendiamin (HMD) und Hexamethylendiamincarbamat (HMDC).

In einer bevorzugten Ausführungsform der Erfindung besteht der mindestens eine Vernetzer aus Polyethylenimin sowie mindestens einem Diamin ausgewählt aus der Gruppe bestehend aus Hexamethylendiamin (HMD) und Hexamethylendiamincarbamat (HMDC).

Erfindungsgemäße Mischungen, in denen der mindestens eine Vernetzer aus Polyethylenimin sowie mindestens einem Diamin besteht, enthalten bevorzugt von 0,01 bis 10 phr, besonders bevorzugt von 0,1 bis 5 phr, ganz besonders bevorzugt von 0,15 bis 1,2 phr Polyethylenimin.

Diese Mischungen enthalten zudem bevorzugt von 0,01 bis 5 phr, besonders bevorzugt von 0,1 bis 3 phr mindestens eines Diamins, bevorzugt ausgewählt aus der Gruppe bestehend aus Hexamethylendiamin (HMD) und Hexamethylendiamincarbamat (HMDC).

Bevorzugt besteht das Vernetzungssystem der erfindungsgemäßen Mischung in dieser bevorzugten Ausführungsform zu ≥ 80 Gew.-%, besonders bevorzugt zu ≥ 90 Gew.-%, ganz besonders bevorzugt zu ≥ 95 Gew.-%, ganz ganz besonders bevorzugt zu ≥ 99 Gew.-%, bezogen auf die Gesamtmasse des Vernetzungssystems, aus mindestens einem Vernetzer, der aus Polyethylenimin sowie mindestens einem Diamin besteht, bevorzugt ausgewählt aus der Gruppe bestehend aus Hexamethylendiamin (HMD) und Hexamethylendiamincarbamat (HMDC).

Das Gew.-%-Verhältnis von Diamin zu Polyethylenimin kann über einen großen Bereich variieren. Bevorzugt beträgt das Gew.-%-Verhältnis von Diamin zu Polyethylenimin 10:1 - 1:10.

In einer besonders bevorzugten Ausführungsform ist der mindestens eine aminisch vernetzbare Kautschuk ein ACM-Kautschuk.

Solche erfindungsgemäßen Mischungen, in denen der mindestens eine Vernetzer aus Polyethylenimin sowie mindestens einem Diamin, bevorzugt ausgewählt aus der Gruppe bestehend aus Hexamethylendiamin (HMD) und Hexamethylendiamincarbamat (HMDC), besteht, und der mindestens eine aminisch vernetzbare Kautschuk ein ACM-Kautschuk ist, enthalten bevorzugt von 0,01 bis 10 phr, besonders bevorzugt von 0,1 bis 5 phr, ganz besonders bevorzugt 0,15 bis 1,2 phr, ganz ganz besonders bevorzugt 0,15 bis 0,35 phr Polyethylenimin.

Diese vorgenannten Mischungen enthalten zudem bevorzugt von 0,01 bis 5 phr, besonders bevorzugt von 0,1 bis 3 phr, ganz besonders bevorzugt von 0,2 bis 1 phr mindestens eines Diamins, bevorzugt ausgewählt aus der Gruppe bestehend aus Hexamethylendiamin (HMD) und Hexamethylendiamincarbamat (HMDC).

Das Gew.-%-Verhältnis von Diamin zu Polyethylenimin beträgt in diesen vorgenannten Mischungen bevorzugt 10:1 - 1:10, besonders bevorzugt 5:1 - 1:5, ganz besonders bevorzugt 5:1 - 1:2, ganz ganz besonders bevorzugt 5:1 - 1 :1, meist bevorzugt 3:1 - 2:1.

In einer alternativen bevorzugten Ausführungsform ist der mindestens eine aminisch vernetzbare Kautschuk ein AEM-Kautschuk.

Solche erfindungsgemäßen Mischungen, in denen der mindestens eine Vernetzer aus Polyethylenimin sowie mindestens einem Diamin, bevorzugt ausgewählt aus der Gruppe bestehend aus Hexamethylendiamin (HMD) und Hexamethylendiamincarbamat (HMDC), besteht, und der mindestens eine aminisch vernetzbare Kautschuk ein AEM-Kautschuk ist, enthalten bevorzugt von 0,01 bis 10 phr, besonders bevorzugt von 0,1 bis 5 phr, ganz besonders bevorzugt 0,15 bis 1,2 phr Polyethylenimin.

Diese vorgenannten Mischungen enthalten zudem bevorzugt von 0,01 bis 5 phr, besonders bevorzugt von 0,1 bis 3 phr, ganz besonders bevorzugt von 1 bis 3 phr mindestens eines Diamins, bevorzugt ausgewählt aus der Gruppe bestehend aus Hexamethylendiamin (HMD) und Hexamethylendiamincarbamat (HMDC).

### Vernetzer bestehend aus Polyethylenimin

In einer alternativen bevorzugten Ausführungsform der Erfindung besteht der mindestens eine Vernetzer aus Polyethylenimin.

Erfindungsgemäße Mischungen, in denen der mindestens eine Vernetzer aus Polyethylenimin besteht, enthalten bevorzugt von 0,001 bis 20 phr, besonders bevorzugt von 0,01 bis 10 phr, ganz besonders bevorzugt von 0,1 bis 5 phr, ganz ganz besonders bevorzugt von 0,2 bis 2 phr Polyethylenimin.

In dieser bevorzugten Ausführungsform besteht das Vernetzungssystem zu ≥ 80 Gew.-%, besonders bevorzugt zu ≥ 90 Gew.-%, ganz besonders bevorzugt zu ≥ 95 Gew.-%, ganz ganz besonders bevorzugt zu ≥ 99 Gew.-%, bezogen auf die Gesamtmasse des Vernetzungssystems, aus Polyethylenimin.

### Vulkanisationsbeschleuniger

Das Vernetzungssystem besteht aus mindestens einem Vernetzer und optional mindestens einem Vulkanisationsbeschleuniger. Demnach kann das Vernetzungssystem den mindestens einen Vulkanisationsbeschleuniger enthalten oder nicht enthalten.

In Sinne der vorliegenden Erfindung sind unter Vulkanisationsbeschleunigern Verbindungen zu verstehen, welche fähig sind, eine Vernetzungsreaktion zwischen Kautschukmolekülen zu beschleunigen. Bevorzugt sind Vulkanisationsbeschleuniger darüber hinaus Verbindungen, die verschieden sind von dem mindestens einen Vernetzer im Sinne der vorliegenden Erfindung.

Bevorzugt enthält das Vulkanisationssystem maximal 20 Gew.-%, besonders bevorzugt maximal 10 Gew.-%, ganz besonders bevorzugt maximal 5 Gew.-%, ganz ganz besonders bevorzugt maximal 1 Gew.-%, meist bevorzugt maximal 0,5 Gew.-% Vulkanisationsbeschleuniger.

Beispiele für solche Vulkanisationsbeschleuniger sind Guanidin-haltige Verbindungen, Xanthogenate, bi- oder polycyclische Amine, Dithiophosphate, Thioharnstoffderivate, Hexamethylentetramin und 1,3-Bis(citraconimidomethyl)benzol.

Zur Klarstellung wird erwähnt, dass der optional mindestens eine Vulkanisationsbeschleuniger in der erfindungsgemäßen Mischung ausschließlich in dem Vernetzungssystem enthalten sein kann. Sofern der optional mindestens eine Vulkanisationsbeschleuniger in dem Vernetzungssystem nicht enthalten ist, ist er auch in der erfindungsgemäßen Mischung nicht enthalten.

### Guanidin-haltige Verbindungen

In dem Vernetzungssystem der erfindungsgemäßen Mischung können Guanidin-haltige Verbindungen in einer geringen Menge enthalten oder nicht enthalten sein.

Im Sinne der vorliegenden Erfindung beträgt der Gesamtgehalt der Vulkanisationsbeschleuniger Diphenylguanidin (DPG), Di-ortho-tolyl-guanidin (DOTG) und 1-(ortho-Tolyl)biguanid des Vernetzungssystems in der erfindungsgemäßen Mischung maximal 0,4 phr, bevorzugt maximal 0,2 phr, besonders bevorzugt maximal 0,1 phr und ganz besonders bevorzugt maximal 0,01 phr.

Weiter bevorzugt beträgt der Gesamtgehalt der Vulkanisationsbeschleuniger Diphenylguanidin (DPG), substituierte Diphenylguanidine, andere organische Guanidin-Derivate, bei denen die Guanidinfunktion mit ein oder mehreren C₁-C₈ Alkylgruppen, C₂-C₈ Alkenylgruppen, C₆-C₈ Arylgruppen, C₇-C₁₀ Aralkylgruppen und/oder C₁-C₈ Heteroalkylgruppen substituiert ist, und 1-(ortho-Tolyl)biguanid des Vernetzungssystems in der erfindungsgemäßen Mischung maximal 0,4 phr, bevorzugt maximal 0,2 phr, besonders bevorzugt maximal 0,1 phr und ganz besonders bevorzugt maximal 0,01 phr.

Meist bevorzugt beträgt der Gesamtgehalt der Vulkanisationsbeschleuniger Guanidin-haltige Verbindungen des Vernetzungssystems in der erfindungsgemäßen Mischung maximal 0,4 phr, bevorzugt maximal 0,2 phr, besonders bevorzugt maximal 0,1 phr und ganz besonders bevorzugt maximal 0,01 phr.

Unter dem Begriff substituierte Diphenylguanidine sind im Sinne der vorliegenden Erfindung bevorzugt solche Diphenylguanidine zu verstehen, bei denen mindestens ein Phenyl-Ring substituiert ist, bevorzugt beide Phenyl-Ringe substituiert sind. Als Substituenten sind verschiedenste Substituenten möglich. Bevorzugt ist ein Substituent eines Phenyl-Rings ausgewählt aus der Gruppe bestehend aus C₁-C₂₀-Alkyl, das substituiert oder unsubstituiert ist, C₂-C₂₀-Alkenyl, das substituiert oder unsubstituiert ist und eine oder mehrere Doppelbindungen enthält, C₂-C₂₀-Alkinyl, das substituiert oder unsubstituiert ist und eine oder mehrere Dreifachbindungen enthält, C₃-C₂₀-Aryl, das substituiert oder unsubstituiert ist, Heteroaryl, das substituiert oder unsubstituiert ist, fünfbis zwanzig-gliedrig ist und ein oder mehrere Heteroatome enthält, C₃-C₁₄-Cycloalkyl, das substituiert oder unsubstituiert ist, Heterocycloalkyl, das substituiert oder unsubstituiert ist, drei- bis acht-gliedrig ist und ein oder mehrere Heteroatome enthält, und Heteroatomen.

### Träger

Die erfindungsgemäße Mischung kann weiterhin mindestens einen Träger enthalten, der geeignet ist, um den mindestens einen Vernetzer darauf aufziehen und/oder daran adsorbieren zu können.

Vorteil solcher Träger-gebundenen Verbindungen sind eine verbesserte Dosierbarkeit und/oder Dispergierbarkeit. Allgemein werden solche Träger-gebundenen Verbindungen auch als "dry liquid" bezeichnet.

Der mindestens eine Träger kann inert, organisch oder anorganisch sein.

Geeignete Träger können beispielsweise helle anorganische Füllstoffe, wie z.B. Glimmer, Kaolin, Kieselerde, Kieselsäure, Kreide, Talkum sein.

Die erfindungsgemäße Mischung kann diesen mindestens einen Träger enthalten oder nicht enthalten.

Der mindestens eine Vernetzer kann in der erfindungsgemäßen Mischung an den mindestens einen Träger aufgezogen und/oder daran adsorbiert sein oder nicht auf den mindestens einen Träger aufgezogen und/oder daran adsorbiert vorliegen.

Bevorzugt ist der mindestens eine Träger ausgewählt aus der Gruppe bestehend aus natürlichen und synthetischen Silikaten, insbesondere ausgewählt aus der Gruppe bestehend aus neutralen, aciden und basischen Silika, Aluminiumoxid, Zinkoxid und Mischungen der vorgenannten. Besonders bevorzugt ist der mindestens eine Träger ausgewählt aus der Gruppe bestehend aus neutralen, aciden und basischen Silika.

In einer bevorzugten Ausführungsform enthält die erfindungsgemäße Mischung mindestens einen Träger, ausgewählt aus der Gruppe bestehend aus neutralen, aciden und basischen Silika, auf den der mindestens eine Vernetzer aufgezogen und/oder daran adsorbiert ist.

Das Gew.-%-Verhältnis von Träger, insbesondere Silika, zu dem mindestens einen Vernetzer kann über einen weiteren Bereich variieren.

Bevorzugt beträgt das Gew.-%-Verhältnis von Träger, insbesondere Silika, zu dem mindestens einen Vernetzer 90:10 - 10:90, besonders bevorzugt 90:10 - 10:60, ganz besonders bevorzugt 15:10 - 10:15.

### Weitere Zusatzstoffe

Die erfindungsgemäßen Mischungen können neben den vorgenannten Verbindungen weitere Zusatzstoffe enthalten.

Die weiteren Zusatzstoffe können in beliebiger Menge in der erfindungsgemäßen Kautschukmischung enthalten sein, bevorzugt zu 30 - 200 phr, besonders bevorzugt zu 40-100 phr.

Die erfindungsgemäßen Mischungen enthalten bevorzugt Ruß als weiteren Zusatzstoff.

Bevorzugt als weiterer Zusatzstoff ist Ruß, der nach dem Flammruß, Furnace- oder Gasruß-Verfahren hergestellt ist. Besonders bevorzugt ist Ruß, der nach dem Furnace-Verfahren hergestellt ist, meist bevorzugt Carbon Black (beispielsweise Corax^{®} N-550).

Bevorzugt weist der Ruß BET-Oberflächen von 20 - 200 m²/g auf. Bevorzugte Ruße sind SAF-, ISAF-, IISAF-, HAF-, FEF- oder GPF-Ruße.

Der Gesamtanteil an Rußen, bevorzugt nach dem Flammruß, Furnace- oder Gasruß-Verfahren hergestellten Rußen, in der Kautschukmischung beträgt typischerweise von 0 bis 160 phr, vorzugsweise 1 bis 100 phr, besonders bevorzugt 30 bis 70 phr.

In einer weiteren bevorzugten Ausführungsform kann die Kautschukmischung 0,1 - 40 phr, vorzugsweise 1-12 phr eines C₁-C₄-Alkylesters des Glycerins, insbesondere Triacetin enthalten.

Die erfindungsgemäße Mischung und das erfindungsgemäße Kautschukvulkanisat können weitere Kautschukhilfsmittel als weitere Zusatzstoffe enthalten, wie beispielsweise Fließhilfsmittel, Haftsysteme, Alterungsschutzmittel, Wärmestabilisatoren, Lichtschutzmittel, Antioxidantien, insbesondere Ozonschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren, Verzögerer, Metalloxide und Aktivatoren, insbesondere Triethanolamin, Polyethylenglykol, Hexantriol und Reversionsschutzmittel.

Diese Kautschukhilfsmittel werden in üblichen Mengen eingesetzt, die sich u. a. nach dem Verwendungszweck der Vulkanisate richten. Übliche Mengen sind 0,1 bis 30 phr.

Als Alterungsschutzmittel werden bevorzugt alkylierte Phenole, styrolisiertes Phenol, sterisch gehinderte Phenole wie 2,6-Di-tert.-butylphenol, 2,6-Di-tert-butyl-p-kresol (BHT), 2,6-Di-tert.-butyl-4-ethylphenol, estergruppenhaltige sterisch gehinderte Phenole, thioetherhaltige sterisch gehinderte Phenole, 2,2'-Methylen-bis-(4-methyl-6-tert-butylphenol) (BPH) sowie aminische Alterungsschutzmittel eingesetzt, wie z. B. Mischungen aus Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylendiaminbasis, z. B. N-Isopropyl-N'-phenyl-p-phenylendiamin, N-1,3-Dimethylbutyl-N'-Phenyl-p-phenylendiamin (6PPD), N-1,4-Dimethylpentyl-N'-phenyl-p-phenylendiamin (7PPD), N,N'-bis-(1,4-Dimethylpentyl)-p-phenylendiamin (77PD), oder 4,4'-Bis(alpha,alpha-dimethylbenzyl)diphenylamin, bevorzugt 4,4'-Bis(alpha,alpha-dimethylbenzyl)diphenylamin.

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C-Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente, sowie Mischungen aus Estern und Ethern.

Um die Entflammbarkeit zu vermindern und die Rauchentwicklung beim Verbrennen zu verringern, kann die erfindungsgemäße Kautschukmischung auch Flammschutzmittel enthalten. Hierfür werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Vor der Vernetzung können der erfindungsgemäßen Kautschukmischung und dem erfindungsgemäßen Kautschukvulkanisat auch weitere Kunststoffe beigefügt werden, welche beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, besonders bevorzugt sind.

Bekannte Haftsysteme basieren auf Resorcin, Formaldehyd und Silica, die sogenannten RFS- Direkthaftsysteme. Diese Direkthaftsysteme können in beliebiger Menge der erfindungsgemäßen Mischung, zu jedem Zeitpunkt des Einmischens in die erfindungsgemäße Mischung, eingesetzt werden.

Die in der erfindungsgemäßen Mischung enthaltenen weiteren Zusatzstoffe sind bevorzugt verschieden von dem mindestens einen aminisch vernetzbaren Kautschuk, dem in dem Vernetzungssystem enthaltenen mindestens einen Vernetzer und dem in dem Vernetzungssystem optional enthaltenen mindestens einen Vulkanisationsbeschleuniger.

Im Folgenden soll die vorliegende Erfindung durch Beispiele erläutert werden, ohne diese jedoch darauf zu beschränken.

### Beispiele

### Bestimmung der Eigenschaften der Kautschukmischungen bzw. der Vulkanisate

Rheometer (Vulkameter) Ausvulkanisationszeit (T90) 180°C, Anvulkanisationszeit (T10), Vernetzungsgrad:
Der Vulkanisationsverlauf am MDR (moving die rheometer) und dessen analytische Daten werden an einem Monsanto-Rheometer MDR 2000 nach ASTM D5289-95 gemessen. Die Anvulkanisationszeit T10 bedeutet die Zeit, bei der 10% des Kautschuks vernetzt sind. Als Ausvulkanisationszeit T90 wird die Zeit bezeichnet, bei der 90% des Kautschuks vernetzt sind. Der Vernetzungsgrad wird als Unterschied zwischen dem höchsten und niedrigsten Wert des Drehmoments gemessen und ist ein Maß für die Vernetzungsdichte. Die gewählte Temperatur betrug 180°C.

### Zugfestigkeit, Modul 20, Modul 50, Modul 100:

Diese Messungen erfolgten nach DIN 53504 (Zugversuch, Stab S 2).

### Druckverformungsrest (DVR):

Die Werte des DVR ergaben sich nach einer Verpressung der Probe um 25% bei 125°C und einer Haltezeit bei dieser Temperatur von 24 Stunden. Die DVR-Werte wurden nach einer Relaxationszeit von 30 min bestimmt (DIN ISO 815).

### Herstellung der Kautschukmischungen und Kautschukvulkanisate

Aus den in Tabellen 2, 3, 5 und 6 aufgeführten Bestandteilen der Kautschukmischungen der (Vergleichs-) Beispiele 1-12 wurden zunächst Kautschukmischungen hergestellt. Dazu wurden jeweils in einem Mischprozess, wie unten beschrieben, die jeweiligen Bestandteile gemischt.

Die in Tabellen 2, 3, 5 und 6 aufgeführten Bestandteile der Kautschukmischungen (in Tabelle 1 näher erläutert) der (Vergleichs-) Beispiele 1-12 wurden jeweils in einem sogenannten "upside down" Verfahren gemischt. Zuerst wurden Ruß, Aflux^{®} 18, Vanfre^{®} VAM, Stearinsäure, Naugard^{®} 445 und je nach Rezeptur, Rhenosin^{®} W 759, Rhenogran^{®} HMDC-70, Rhenogran^{®} DOTG-70, Rhenogran^{®} XLA-60 bzw. Lupasol^{®} PR 8515 in einem Kneter (GK 1,5) vorgelegt und bei einer Temperatur von 50°C und ca. 40 Umdrehungen/min gemischt. Nach ca. 1 min. wurde die Hälfte des Kautschuks Racrester^{™} CH bzw VAMAC^{®} G dazugegeben und eine weitere Minute gemischt. Nach 2 min wurde der Rest des Kautschuks zugegeben, bis Drehmomentgleichgewicht gemischt und ausgeworfen. Anschließend wurde die Mischung auf eine temperierte Walze gegeben um ein Fell für die weitere Verarbeitung zu bekommen. Die Walzentemperatur lag bei 25°C.

Die erhaltenen Kautschukmischungen der (Vergleichs-) Beispiele 1-12 wurden bei 180°C ausvulkanisiert und anschließend 4 Stunden bei 175°C getempert. Der Druck betrug 300 bar.

**Tabelle 1: Handelsname, Erläuterung und Hersteller/Vertrieb der Bestandteile der Kautschukmischungen aus Tabelle 2 und 3 sowie Tabelle 5 und 6**

| **Handelsname** | **Erläuterung** | **Hersteller/Vertrieb** |
|---|---|---|
| Racrester^{™} CH | ACM-Kautschuk | Osaka Soda Co. Ltd |
| VAMAC^{®} G | AEM Kautschuk | DuPont |
| Corax^{®} N-550 | Ruß CB N550 | Orion Engineered Carbons GmbH |
| Rhenogran ^{®} DOTG-70 | Diorthotolylguanidin | LANXESS Deutschland GmbH |
| Aflux^{®} 18 | Fließhilfsmittel (primäres Fettamin) | LANXESS Deutschland GmbH |
| Vanfre^{®} VAM | Entformer (Phosphatester) | Vanderbilt Chemicals, LLC |
| Stearinsäure | Verarbeitungswirkstoff | Peter Greven GmbH und Co. KG |
| Rhenosin^{®} W 759 | Verarbeitungswirkstoff (Mischung aus Ether/Ester) | LANXESS Deutschland GmbH |
| Naugard^{®} 445 | Alterungsschutzmittel 4,4'-Bis (alpha, alphadimethylbenzyl) diphenylamin | Addivant |
| Rhenogran^{®} HMDC-70/AEMD | Hexamethylendiamincarbamat | LANXESS Deutschland GmbH |
| Rhenogran^{®} XLA-60 | Aktiviertes DBU | LANXESS Deutschland GmbH |
| Lupasol^{®} PR 8515 | Polyethylenimin, CAS-Nr.: 25987-06-8 | BASF AG |

**Tabelle 2: Bestandteile der Kautschukmischungen (Vergleichsbeispiele 1-3)**

| | **Vergleichsbeispiel 1** | | **Vergleichsbeispiel 2** | | **Vergleichsbeispiel 3** | |
|---|---|---|---|---|---|---|
| | phr | Gew. % | phr | Gew. % | phr | Gew. % |
| Corax^{®} N-550 | 55,00 | 34,35 | 55,00 | 34,06 | 55,00 | 33,93 |
| Aflux^{®}18 | 0,50 | 0,31 | 0,50 | 0,31 | 0,50 | 0,31 |
| Vanfre^{®} VAM | 1,00 | 0,62 | 1,00 | 0,62 | 1,00 | 0,62 |
| Stearinsäure | 1,00 | 0,62 | 1,00 | 0,62 | 1,00 | 0,62 |
| Naugard^{®} 445 Powder | 2,00 | 1,25 | 2,00 | 1,24 | 2,00 | 1,23 |
| Rhenogran^{®} HMDC-70/AEMD | 0,60 | 0,37 | | | 0,60 | 0,37 |
| Racrester^{™} CH | 100,00 | 62,46 | 100,00 | 61,92 | 100,00 | 61,69 |
| Rhenogran^{®} DOTG-70 | | | 2,00 | 1,24 | 2,00 | 1,23 |

**Tabelle 3: Bestandteile der Kautschukmischungen (Vergleichsbeispiel 4 und erfindungsgemäße Beispiele 5 und 6)**

| | **Vergleichsbeispiel 4** | | **Beispiel 5 (erfindungsgemäß)** | | **Beispiel 6 (erfindungsgemäß)** | |
|---|---|---|---|---|---|---|
| | phr | Gew. % | phr | Gew. % | phr | Gew. % |
| Corax^{®} N-550 | 55,00 | 33,93 | 55,00 | 34,30 | 55,00 | 34,32 |
| Aflux^{®} 18 | 0,50 | 0,31 | 0,50 | 0,31 | 0,50 | 0,31 |
| Vanfre^{®} VAM | 1,00 | 0,62 | 1,00 | 0,62 | 1,00 | 0,62 |
| Stearinsäure | 1,00 | 0,62 | 1,00 | 0,62 | 1,00 | 0,62 |
| Naugard^{®} 445 Powder | 2,00 | 1,23 | 2,00 | 1,25 | 2,00 | 1,25 |
| Rhenogran^{®} HMDC-70/AEMD | 0,60 | 0,37 | 0,60 | 0,37 | | |
| Racrester^{™} CH | 100,00 | 61,69 | 100,00 | 62,36 | 100,00 | 62,40 |
| Rhenogran^{®} DOTG-70 | | | | | | |
| Lupasol^{®} PR 8515 | | | 0,25 | 0,16 | 0,75 | 0,47 |
| Rhenogran^{®} XLA-60 | 2,00 | 1,23 | | | | |

Mengenangaben in phr (Gewichtsteile pro 100 Teile Kautschuk) und Gew.-% (bezogen auf das Gesamtgewicht der Kautschukmischung).

Die hergestellten Kautschukmischungen der (Vergleichs-) Beispiele 1-12 und die daraus erhaltenen Vulkanisate wurden den unten angegebenen technischen Prüfungen unterzogen. Die ermittelten Werte sind den Tabellen 4, 7 und 8 zu entnehmen. Die Kautschukmischungen der Beispiele 5, 6, 11 und 12 sowie die daraus erhaltenen Vulkanisate, deren Ergebnisse unter "Beispiel 5", "Beispiel 6", "Beispiel 11" bzw. "Beispiel 12" in Tabellen 4, 7 und 8 gezeigt sind, sind erfindungsgemäß.

Die Mischschritte und die Reihenfolge der Additive können beliebig variiert werden und Polyethylenimin kann in jedem beliebigen Mischschritt hinzugegeben werden.

**Tabelle 4: Ergebnisse der technischen Prüfungen**

| | **Vergleichsbeispiel 1** | **Vergleichsbeispiel 2** | **Vergleichsbeispiel 3** | **Vergleichsbeispiel 4** | **Beispiel 5 (erfindungsgemäß)** | **Beispiel 6 (erfindungsgemäß)** |
|---|---|---|---|---|---|---|
| Anvulkanisationszeit T10 [sec] | 29,0 | 18,0 | 30,0 | 30,0 | 31,0 | 26,0 |
| Ausvulkanisationszeit T90 [sec] | 571,0 | 520,0 | 335,0 | 346,0 | 499,0 | 445,0 |
| Vernetzungsgrad (Fmax-Fmin) | 2,4 | 0,5 | 4,0 | 3,7 | 7,2 | 6,8 |
| Zugfestigkeit [MPa] | 5,9 | | 8,6 | 7,3 | 9,5 | 8,8 |
| Spannungsmodul 20% [Mpa] | 0,3 | | 0,4 | 0,4 | 0,5 | 0,5 |
| Spannungsmodul 50% [Mpa] | 0,5 | | 0,6 | 0,6 | 1,1 | 1,2 |
| Spannungsmodul 100% [Mpa] | 0,8 | | 1,2 | 1,0 | 3,1 | 3,3 |
| Druckverformungs rest [%] | 24,0 | | 19,0 | 25,0 | 15,0 | 27,0 |

### Erfindungsgemäßes Beispiel 5 im Vergleich zu den Vergleichsbeispielen 3 und 4

Vergleichsbeispiel 3 stellt eine dem Fachmann bekannte Standard-Vernetzungsrezeptur für einen ACM-Kautschuk dar. Sie enthält neben Kautschuk, Verarbeitungswirkstoffen und Ruß 0,37 Gew.-% Vernetzer HMDC und 1,23 Gew.-% des Vulkanisationsbeschleunigers DOTG. Die erfindungsgemäße Rezeptur in Beispiel 5 enthält anstelle des Guanidin-Beschleunigers DOTG nur 0,16% Polyethylenimin. Unter Beibehaltung der kurzen Anvulkanisationszeit T10 werden eine vorteilhafte Verringerung des Druckverformungsrests und eine vorteilhafte Erhöhung des Vernetzungsgrades und der Zugfestigkeit erzielt.

Entsprechendes gilt für einen Vergleich der erfindungsgemäßen Kautschukmischung gemäß Beispiel 5 mit der Kautschukmischung gemäß Vergleichsbeispiel 4, die DBU als Guanidin-Ersatz enthält und wie oben näher erläutert ebenfalls eine bekannte Standard-Vernetzungsrezeptur für einen ACM-Kautschuk darstellt.

### Erfindungsgemäßes Beispiel 6 im Vergleich zu den Vergleichsbeispielen 1 und 3

Die Kautschukmischung nach Vergleichsbeispiel 1 enthält, im Gegensatz zu jener aus Vergleichsbeispiel 3, als einzigen Unterschied keinen Vulkanisationsbeschleuniger. Die Vernetzung erfolgt nur durch den Vernetzer HMDC (0,37 Gew.-%) ohne Vulkanisationsbeschleuniger. Die Vernetzung ist dadurch deutlich langsamer (längere T90), der Vernetzungsgrad und die Zugfestigkeit sind niedriger und der Druckverformungsrest ist größer. Die erfindungsgemäße Mischung des Beispiels 6 enthält auch keinen Vulkanisationsbeschleuniger, nutzt aber 0,47 Gew.-% Polyethylenimin anstelle von HMDC als Vernetzer. Verglichen mit Vergleichsbeispiel 1 beobachtet man unter Beibehaltung einer kurzen Anvulkanisationszeit T10 eine schnellere Ausvulkanisationszeit T90. Der Vernetzungsgrad, die Zugfestigkeit und die Moduli bei 20%, 50% und 100% Dehnung sind alle höher und damit vorteilhafter. Sogar die dem Fachmann bekannte Standard-Vernetzungsrezeptur gemäß Vergleichsbeispiel 3 wird hinsichtlich Vernetzungsgrad, Zugfestigkeit und Moduli übertroffen.

### Vergleichsbeispiel 2

Vergleichsbeispiel 2 zeigt die Standard-Vernetzungsrezeptur des Vergleichsbeispiels 3 ohne den Vernetzer HMDC und folglich nur mit dem Vulkanisationsbeschleuniger DOTG allein. Es kam keine Vernetzungsreaktion zustande unter Verwendung von lediglich DOTG allein.

**Tabelle 5: Bestandteile der AEM-Kautschukmischungen (Vergleichsbeispiele 7-9)**

| | Vergleichsbeispiel 7 | | Vergleichsbeispiel 8 | | Vergleichsbeispiel 9 | |
|---|---|---|---|---|---|---|
| | phr | Gew.% | phr | Gew.% | phr | Gew. % |
| VAMAC^{®} G | 100,00 | 57,77 | 100,00 | 56,59 | 100,00 | 55,93 |
| Corax^{®} N-550 | 60,00 | 34,66 | 60,00 | 33,96 | 60,00 | 33,56 |
| Naugard^{®} 445 Powder | 2,00 | 1,16 | 2,00 | 1,13 | 2,00 | 1,12 |
| Rhenosin^{®} W 759 | 6,00 | 3,47 | 6,00 | 3,40 | 6,00 | 3,36 |
| Vanfre^{®} VAM | 1,00 | 0,58 | 1,00 | 0,57 | 1,00 | 0,56 |
| Aflux^{®}18 | 0,50 | 0,29 | 0,50 | 0,28 | 0,50 | 0,28 |
| Rhenogran^{®} HMDC-70/AEMD | 2,10 | 1,21 | | | 2,10 | 1,17 |
| Rhenogran^{®} DOTG-70 | | | 5,70 | 3,23 | 5,70 | 3,19 |
| Stearinsäure | 1,50 | 0,87 | 1,50 | 0,85 | 1,50 | 0,84 |

**Tabelle 6: Bestandteile der Kautschukmischungen (Vergleichsbeispiel 10 und erfindungsgemäße Beispiele 11 und 12)**

| | Vergleichsbeispiel 10 | | Beispiel 11 (erfindungsgemäß) | | Beispiel 12 (erfindungsgemäß) | |
|---|---|---|---|---|---|---|
| | phr | Gew. % | phr | Gew. % | phr | Gew. % |
| VAMAC^{®} G | 100,00 | 57,77 | 100,00 | 57,52 | 100,00 | 57,72 |
| Corax^{®} N-550 | 60,00 | 34,66 | 60,00 | 34,51 | 60,00 | 34,63 |
| Naugard^{®} 445 Powder | 2,00 | 1,16 | 2,00 | 1,15 | 2,00 | 1,15 |
| Rhenosin^{®} W 759 | 6,00 | 3,47 | 6,00 | 3,45 | 6,00 | 3,46 |
| Vanfre^{®} VAM | 1,00 | 0,58 | 1,00 | 0,58 | 1,00 | 0,58 |
| Aflux^{®}18 | 0,50 | 0,29 | 0,50 | 0,29 | 1,00 | 0,58 |
| Rhenogran^{®} HMDC-70/AEMD | 2,10 | 1,21 | 2,10 | 1,21 | | |
| Rhenogran^{®} DOTG-70 | | | | | | |
| Stearinsäure | 1,50 | 0,87 | 1,50 | 0,86 | 1,50 | 0,87 |
| Lupasol^{®} PR 8515 | | | 0,75 | 0,43 | 1,75 | 1,01 |
| Rhenogran^{®} XLA-60 | 2,00 | | | | | |

Mengenangaben in phr (Gewichtsteile pro 100 Teile Kautschuk) und Gew.-% (bezogen auf das Gesamtgewicht der Kautschukmischung).

**Tabelle 7: Ergebnisse der technischen Prüfungen (Vergleichsbeispiele 7-9)**

| | Vergleichsbeispiel 7 | Vergleichsbeispiel 8 | Vergleichsbeispiel 9 |
|---|---|---|---|
| Anvu lkanisationszeit T10 [sec] | 49,0 | 26,0 | 43,0 |
| Ausvulkanisationszeit T90 [sec] | 1278,0 | 668,0 | 469,0 |
| Vernetzungsgrad (Fmax-Fmin) | 10,8 | 0,3 | 13,3 |
| Zugfestigkeit [MPa] | 16,3 | | 14,5 |
| Spannungsmodul 20% [Mpa] | 4,7 | | 1,1 |
| Spannungsmodul 50% [Mpa] | 2,3 | | 2,2 |
| Spannungsmodul 100% [Mpa] | 4,9 | | 5,0 |

**Tabelle 8: Ergebnisse der technischen Prüfungen (Vergleichsbeispiel 10 und erfindungsgemäße Beispiele 11 und 12)**

| | Vergleichsbeispiel 10 | Beispiel 11 (erfindungsgemäß) | Beispiel 12 (erfindungsgemäß) |
|---|---|---|---|
| Anvulkanisationszeit T10 [sec] | 44,0 | 46,0 | 30,0 |
| Ausvulkanisationszeit T90 [sec] | 501,0 | 773,0 | 634,0 |
| Vernetzungsgrad (Fmax-Fmin) | 13,4 | 18,1 | 11,9 |
| Zugfestigkeit [MPa] | 17,0 | 15,6 | 14,2 |
| Spannungsmodul 20% [Mpa] | 1,3 | 1,4 | 1,4 |
| Spannungsmodul 50% [Mpa] | 2,8 | 3,4 | 3,6 |
| Spannungsmodul 100% [Mpa] | 6,4 | 7,8 | 8,6 |

### Erfindungsgemäßes Beispiel 11 im Vergleich zu den Vergleichsbeispielen 9 und 10

Vergleichsbeispiel 9 stellt eine dem Fachmann bekannte Standard-Vernetzungsrezeptur für einen AEM-Kautschuk dar. Sie enthält neben Kautschuk, Verarbeitungswirkstoffen und Ruß 1,17 Gew.-% Vernetzer HMDC und 3,19 Gew.-% des Vulkanisationsbeschleunigers DOTG. Die erfindungsgemäße Rezeptur in Beispiel 11 enthält anstelle des Guanidin-Beschleunigers DOTG nur 0,43 Gew.-% Polyethylenimin. Bei einer ähnlich kurzen Anvulkanisationszeit T10 werden eine vorteilhafte Erhöhung des Vernetzungsgrades, der Zugfestigkeit und der Spannungsmoduli bei 20%, 50% und 100% Dehnung erzielt.

Ähnliche Vorteile zeigt ein Vergleich der erfindungsgemäßen Kautschukmischung gemäß Beispiel 11 mit der Kautschukmischung gemäß Vergleichsbeispiel 10, die DBU als Guanidin-Ersatz enthält und wie oben näher erläutert ebenfalls eine bekannte Standard-Vernetzungsrezeptur für einen AEM-Kautschuk darstellt.

### Erfindungsgemäßes Beispiel 12 im Vergleich zu den Vergleichsbeispielen 7 und 9

Die Kautschukmischung nach Vergleichsbeispiel 7 enthält, im Gegensatz zu jener aus Vergleichsbeispiel 9, als einzigen Unterschied keinen Vulkanisationsbeschleuniger. Die Vernetzung erfolgt nur durch den Vernetzer HMDC (1,21 Gew.-%) ohne Vulkanisationsbeschleuniger. Die Vernetzung ist dadurch deutlich langsamer (längere T90) und der Vernetzungsgrad ist niedriger. Die erfindungsgemäße Mischung des Beispiels 12 enthält auch keinen Vulkanisationsbeschleuniger, nutzt aber 1,01 Gew.-% Polyethylenimin anstelle von HMDC als Vernetzer. Verglichen mit Vergleichsbeispiel 7 beobachtet man unter Beibehaltung einer kurzen Anvulkanisationszeit T10 eine deutlich schnellere Ausvulkanisationszeit T90. Der Vernetzungsgrad, und die Moduli bei 50% und 100% Dehnung sind höher und damit vorteilhafter. Sogar die dem Fachmann bekannte Standard-Vernetzungsrezeptur gemäß Vergleichsbeispiel 9 wird, bei ähnlicher Zugfestigkeit, hinsichtlich Spannungsmoduli bei 20%, 50% und 100% Dehnung übertroffen.

### Vergleichsbeispiel 8

Vergleichsbeispiel 8 zeigt die Standard-Vernetzungsrezeptur des Vergleichsbeispiels 9 ohne den Vernetzer HMDC und folglich nur mit dem Vulkanisationsbeschleuniger DOTG allein. Es kam keine Vernetzungsreaktion zustande unter Verwendung von lediglich DOTG allein.

Zusammengefasst zeigte sich überraschend, dass die Verwendung von Polyethylenimin anstelle des Guanidin-haltigen Vulkanisationsbeschleunigers DOTG oder anstelle von des Vernetzers HMDC oder anstelle von sowohl HMDC als auch DOTG es ermöglicht, Kautschukmischungen bereitzustellen, deren Anwendungseigenschaften nicht nur auf gleichem Niveau wie die der Guanidin- und/oder HMDC-haltigen Äquivalente liegen sondern sich sogar vorteilhaft davon abheben, insbesondere im Hinblick auf die Zugfestigkeit, Moduli und den Vernetzungsgrad der daraus erhältlichen Vulkanisate.

## Patentansprüche

1. Mischung enthaltend
- mindestens einen aminisch vernetzbaren Kautschuk und
- ein Vernetzungssystem, welches aus mindestens einem Vernetzer und optional mindestens einem Vulkanisationsbeschleuniger besteht, wobei der mindestens eine Vernetzer Polyethylenimin enthält, und wobei der Gesamtgehalt der Vulkanisationsbeschleuniger Diphenylguanidin (DPG), Di-ortho-tolyl-guanidin (DOTG) und 1-(ortho-Tolyl)biguanid des Vernetzungssystems in der Mischung maximal 0,4 phr, bevorzugt maximal 0,2 phr, besonders bevorzugt maximal 0,1 phr und ganz besonders bevorzugt maximal 0,01 phr beträgt.

2. Mischung gemäß Anspruch 1, **dadurch gekennzeichnet, dass** das Vernetzungssystem zu ≥ 80 Gew.-%, bevorzugt zu ≥ 90 Gew.-%, besonders bevorzugt zu ≥ 95 Gew.-%, ganz besonders bevorzugt zu ≥ 99 Gew.-%, bezogen auf die Gesamtmasse des Vernetzungssystems, aus mindestens einem Vernetzer besteht, wobei der mindestens eine Vernetzer Polyethylenimin enthält.

3. Mischung gemäß einem der Ansprüche 1 oder 2, **dadurch gekennzeichnet, dass** der mindestens eine Vernetzer Polyethylenimin und mindestens ein Diamin, bevorzugt ausgewählt aus der Gruppe bestehend aus Hexamethylendiamin (HMD) und Hexamethylendiamincarbamat (HMDC), enthält.

4. Mischung gemäß einem der Ansprüche 1 bis 3, **dadurch gekennzeichnet, dass** der mindestens eine Vernetzer aus Polyethylenimin und mindestens einem Diamin, bevorzugt ausgewählt aus der Gruppe bestehend aus Hexamethylendiamin (HMD) und Hexamethylendiamincarbamat (HMDC), besteht.

5. Mischung gemäß einem der Ansprüche 1 bis 2, **dadurch gekennzeichnet, dass** der mindestens eine Vernetzer aus Polyethylenimin besteht.

6. Mischung gemäß einem der Ansprüche 1 bis 5, **dadurch gekennzeichnet, dass** der Gehalt an Polyethylenimin von 0,001 bis 20 phr, bevorzugt von 0,01 bis 10 phr, besonders bevorzugt von 0,1 bis 5 phr, ganz besonders bevorzugt von 0,2 bis 2 phr beträgt.

7. Mischung gemäß einem der Ansprüche 3 oder 4, **dadurch gekennzeichnet, dass** der Gehalt des mindestens einen Diamins, bevorzugt ausgewählt aus der Gruppe bestehend aus Hexamethylendiamin (HMD) und Hexamethylendiamincarbamat (HMDC), von 0,01 bis 5 phr, bevorzugt von 0,1 bis 3 phr beträgt.

8. Mischung gemäß einem der Ansprüche 1 bis 7, **dadurch gekennzeichnet, dass** der mindestens eine aminisch vernetzbare Kautschuk ein Carboxylgruppen-haltiger Kautschuk ist, bevorzugt ausgewählt aus der Gruppe bestehend aus ACM- und AEM-Kautschuken.

9. Mischung gemäß einem der Ansprüche 1 bis 4 oder 6 bis 8, **dadurch gekennzeichnet, dass** der mindestens eine aminisch vernetzbare Kautschuk ein ACM-Kautschuk ist, der Gehalt an Polyethylenimin 0,01 bis 10 phr, bevorzugt 0,1 bis 5 phr, besonders bevorzugt 0,15 bis 1,2 phr, ganz besonders bevorzugt 0,15 bis 0,35 phr beträgt, und der Gehalt des mindestens einen Diamins, bevorzugt ausgewählt aus der Gruppe bestehend aus Hexamethylendiamin (HMD) und Hexamethylendiamincarbamat (HMDC), 0,01 bis 5 phr, bevorzugt 0,1 bis 3 phr, besonders bevorzugt 0,2 bis 1 phr beträgt.

10. Mischung gemäß einem der Ansprüche 1 bis 9, **dadurch gekennzeichnet, dass** die Mischung mindestens einen Träger enthält, ausgewählt aus der Gruppe bestehend aus neutralen, aciden und basischen Silika, auf den der mindestens eine Vernetzer aufgezogen und/oder daran adsorbiert ist.

11. Verfahren zur Herstellung einer Mischung nach einem der Ansprüche 1 bis 10 oder 18, **dadurch gekennzeichnet, dass** der mindestens eine aminisch vernetzbare Kautschuk, der mindestens eine Vernetzer und optional der mindestens eine Vulkanisationsbeschleuniger gemischt werden, bevorzugt in einem ersten Schritt der mindestens eine Vernetzer und optional der mindestens eine Vulkanisationsbeschleuniger, und in einem zweiten Schritt der mindestens eine aminisch vernetzbare Kautschuk, besonders bevorzugt schrittweise, zu der Mischung erhalten nach dem ersten Schritt, gefügt wird.

12. Verfahren zur Herstellung von Kautschukvulkanisaten, **dadurch gekennzeichnet, dass** man die Mischung gemäß einem der Ansprüche 1 bis 10 oder 18 vulkanisiert, vorzugsweise bei einer Temperatur von 100 bis 280 °C, besonders bevorzugt von 150 bis 210 °C.

13. Vulkanisate, erhältlich durch Vulkanisation von Mischungen gemäß einem der Ansprüche 1 bis 10 oder 18 oder nach dem Verfahren gemäß Anspruch 12 .

14. Kautschukartikel, vorzugsweise Dichtungen, Schläuche, Membranen und/oder O-Ringe, enthaltend ein oder mehrere Vulkanisate gemäß Anspruch 13.

15. Fahrzeug enthaltend mindestens einen Kautschukartikel gemäß Anspruch 14.

16. Verwendung von Polyethylenimin zur Herstellung von Mischungen gemäß einem der Ansprüche 1 bis 10 oder 18, Vulkanisaten gemäß Anspruch 13 oder Kautschukartikeln gemäß Anspruch 14.

17. Verwendung eines Vernetzungssystems, bestehend aus mindestens einem Vernetzer und optional mindestens einem Vulkanisationsbeschleuniger, zur Vernetzung mindestens eines aminisch vernetzbaren Kautschuks, **dadurch gekennzeichnet, dass** das Vernetzungssystem zu ≥ 80 Gew.-%, bevorzugt zu ≥ 90 Gew.-%, besonders bevorzugt zu ≥ 95 Gew.-%, ganz besonders bevorzugt zu ≥ 99 Gew.-%, bezogen auf die Gesamtmasse des Vernetzungssystems, aus mindestens einem Vernetzer besteht, wobei der mindestens eine Vernetzer Polyethylenimin und optional mindestens ein Diamin, bevorzugt ausgewählt aus der Gruppe bestehend aus Hexamethylendiamin (HMD) und Hexamethylendiamincarbamat (HMDC), enthält, und der Gesamtgehalt der Vulkanisationsbeschleuniger Diphenylguanidin (DPG), Di-ortho-tolyl-guanidin (DOTG) und 1-(ortho-Tolyl)biguanid des Vernetzungssystems maximal 0,4 phr, bevorzugt maximal 0,2 phr, besonders bevorzugt maximal 0,1 phr und ganz besonders bevorzugt maximal 0,01 phr beträgt, bezogen auf den mindestens einen aminisch vernetzbaren Kautschuk.

18. Mischung gemäß einem der Ansprüche 1 bis 4 oder 6 bis 8 oder 10, **dadurch gekennzeichnet, dass** der mindestens eine aminisch vernetzbare Kautschuk ein AEM-Kautschuk ist, der Gehalt an Polyethylenimin 0,01 bis 10 phr, bevorzugt 0,1 bis 5 phr, besonders bevorzugt 0,15 bis 1,2 phr beträgt, und der Gehalt des mindestens einen Diamins, bevorzugt ausgewählt aus der Gruppe bestehend aus Hexamethylendiamin (HMD) und Hexamethylendiamincarbamat (HMDC), 0,01 bis 5 phr, bevorzugt 0,1 bis 3 phr, besonders bevorzugt 1 bis 3 phr beträgt.

## Claims

1. Mixture comprising
- at least one aminically crosslinkable rubber and
- a crosslinking system consisting of at least one crosslinker and optionally at least one vulcanization accelerator, wherein the at least one crosslinker comprises polyethyleneimine, and wherein the total content of the vulcanization accelerators diphenylguanidine (DPG), di-ortho-tolyl-guanidine (DOTG) and 1-(ortho-tolyl)biguanide of the crosslinking system in the mixture is not more than 0.4 phr, preferably not more than 0.2 phr, particularly preferably not more than 0.1 phr and very particularly preferably not more than 0.01 phr.

2. Mixture according to Claim 1, **characterized in that** the crosslinking system consists to an extent of ≥ 80% by weight, preferably to an extent of ≥ 90% by weight, particularly preferably to an extent of ≥ 95% by weight, very particularly preferably to an extent of ≥ 99% by weight, based on the total mass of the crosslinking system, of at least one crosslinker, wherein the at least one crosslinker comprises polyethyleneimine.

3. Mixture according to either of Claims 1 and 2, **characterized in that** the at least one crosslinker comprises polyethyleneimine and at least one diamine, preferably selected from the group consisting of hexamethylenediamine (HMD) and hexamethylenediamine carbamate (HMDC).

4. Mixture according to any of Claims 1 to 3, **characterized in that** the at least one crosslinker consists of polyethyleneimine and at least one diamine, preferably selected from the group consisting of hexamethylenediamine (HMD) and hexamethylenediamine carbamate (HMDC).

5. Mixture according to either of Claims 1 to 2, **characterized in that** the at least one crosslinker consists of polyethyleneimine.

6. Mixture according to any of Claims 1 to 5, **characterized in that** the content of polyethyleneimine is from 0.001 to 20 phr, preferably from 0.01 to 10 phr, particularly preferably from 0.1 to 5 phr, very particularly preferably from 0.2 to 2 phr.

7. Mixture according to either of Claims 3 and 4, **characterized in that** the content of the at least one diamine, preferably selected from the group consisting of hexamethylenediamine (HMD) and hexamethylenediamine carbamate (HMDC), is from 0.01 bis 5 phr, preferably from 0.1 to 3 phr.

8. Mixture according to any of Claims 1 to 7, **characterized in that** the at least one aminically crosslinkable rubber is a carboxyl-containing rubber, preferably selected from the group consisting of ACM and AEM rubbers.

9. Mixture according to any of Claims 1 to 4 or 6 to 8, **characterized in that** the at least one aminically crosslinkable rubber is an ACM rubber, the content of polyethyleneimine is 0.01 to 10 phr, preferably 0.1 to 5 phr, particularly preferably 0.15 to 1.2 phr, very particularly preferably 0.15 to 0.35 phr, and the content of the at least one diamine, preferably selected from the group consisting of hexamethylenediamine (HMD) and hexamethylenediamine carbamate (HMDC), is 0.01 to 5 phr, preferably 0.1 to 3 phr, particularly preferably 0.2 to 1 phr.

10. Mixture according to any of Claims 1 to 9, **characterized in that** the mixture comprises at least one support selected from the group consisting of neutral, acidic and basic silica on which the at least one crosslinker is absorbed and/or adsorbed.

11. Process for producing a mixture according to any of Claims 1 to 10 or 18, **characterized in that** the at least one aminically crosslinkable rubber, the at least one crosslinker and optionally the at least one vulcanization accelerator are mixed, preferably in a first step the at least one crosslinker and optionally the at least one vulcanization accelerator are mixed and in a second step the at least one aminically crosslinkable rubber is added, particularly preferably stepwise, to the mixture obtained after the first step.

12. Process for producing rubber vulcanizates, **characterized in that** the mixture according to any of Claims 1 to 10 or 18 is vulcanized, preferably at a temperature of 100°C to 280°C, particularly preferably of 150°C to 210°C.

13. Vulcanizates obtainable by vulcanization of mixtures according to any of Claims 1 to 10 or 18 or by the process according to Claim 12.

14. Rubber article, preferably seals, hoses, membranes and/or O-rings, comprising one or more vulcanizates according to Claim 13.

15. Vehicle comprising at least one rubber article according to Claim 14.

16. Use of polyethyleneimine for producing mixtures according to any of Claims 1 to 10 or 18, vulcanizates according to Claim 13 or rubber articles according to Claim 14.

17. Use of a crosslinking system consisting of at least one crosslinker and optionally at least one vulcanization accelerator for crosslinking at least one aminically crosslinkable rubber, **characterized in that** the crosslinking system consists to an extent of ≥ 80% by weight, preferably to an extent of ≥ 90% by weight, particularly preferably to an extent of ≥ 95% by weight, very particularly preferably to an extent of ≥ 99% by weight, based on the total mass of the crosslinking system, of at least one crosslinker, wherein the at least one crosslinker comprises polyethyleneimine and optionally at least one diamine, preferably selected from the group consisting of hexamethylenediamine (HMD) and hexamethylenediamine carbamate (HMDC), and the total content of the vulcanization accelerators diphenylguanidine (DPG), di-ortho-tolyl-guanidine (DOTG) and 1-(ortho-tolyl)biguanide of the crosslinking system is not more than 0.4 phr, preferably not more than 0.2 phr, particularly preferably not more than 0.1 phr and very particularly preferably not more than 0.01 phr, based on the at least one aminically crosslinkable rubber.

18. Mixture according to any of Claims 1 to 4 or 6 to 8 or 10, **characterized in that** the at least one aminically crosslinkable rubber is an AEM rubber, the content of polyethyleneimine is 0.01 to 10 phr, preferably 0.1 to 5 phr, particularly preferably 0.15 to 1.2 phr, and the content of the at least one diamine, preferably selected from the group consisting of hexamethylenediamine (HMD) and hexamethylenediamine carbamate (HMDC), is 0.01 to 5 phr, preferably 0.1 to 3 phr, particularly preferably 1 to 3 phr.

## Revendications

1. Mélange contenant
- au moins un caoutchouc réticulable par amine et
- un système de réticulation, qui est constitué par au moins un réticulant et éventuellement au moins un accélérateur de vulcanisation, ledit au moins un réticulant contenant de la polyéthylène-imine et la teneur totale en accélérateurs de vulcanisation diphénylguanidine (DPG), di-ortho-toluylguanidine (DOTG) et 1-(ortho-toluyl)biguanide du système de réticulation dans le mélange étant d'au maximum 0,4 pcc, de préférence d'au maximum 0,2 pcc, de manière particulièrement préférée d'au maximum 0,1 pcc et de manière tout particulièrement préférée d'au maximum 0,01 pcc.

2. Mélange selon la revendication 1, **caractérisé en ce que** le système de réticulation est constitué, à raison de ≥ 80% en poids, de préférence à raison de ≥ 90% en poids, de manière particulièrement préférée à raison de ≥ 95% en poids, de manière tout particulièrement préférée à raison de ≥ 99% en poids, par rapport à la masse totale du système de réticulation, par au moins un réticulant, ledit au moins un réticulant contenant de la polyéthylène-imine.

3. Mélange selon l'une quelconque des revendications 1 ou 2, **caractérisé en ce que** ledit au moins un réticulant contient de la polyéthylène-imine et au moins une diamine, de préférence choisie dans le groupe constitué par l'hexaméthylènediamine (HMD) et le carbamate d'hexaméthylènediamine (HMDC).

4. Mélange selon l'une quelconque des revendications 1 à 3, **caractérisé en ce que** ledit au moins un réticulant est constitué par de la polyéthylène-imine et au moins une diamine, de préférence choisie dans le groupe constitué par l'hexaméthylènediamine (HMD) et le carbamate d'hexaméthylènediamine (HMDC).

5. Mélange selon l'une quelconque des revendications 1 à 2, **caractérisé en ce que** ledit au moins un réticulant est constitué par de la polyéthylène-imine.

6. Mélange selon l'une quelconque des revendications 1 à 5, **caractérisé en ce que** la teneur en polyéthylène-imine est de 0,001 à 20 pcc, de préférence de 0,01 à 10 pcc, de manière particulièrement préférée de 0,1 à 5 pcc, de manière tout particulièrement préférée de 0,2 à 2 pcc.

7. Mélange selon l'une quelconque des revendications 3 ou 4, **caractérisé en ce que** la teneur en ladite au moins une diamine, de préférence choisie dans le groupe constitué par l'hexaméthylènediamine (HMD) et le carbamate d'hexaméthylènediamine (HMDC), est de 0,01 à 5 pcc, de préférence de 0,1 à 3 pcc.

8. Mélange selon l'une quelconque des revendications 1 à 7, **caractérisé en ce que** ledit au moins un caoutchouc réticulable par amine est un caoutchouc contenant des groupes carboxyle, de préférence choisi dans le groupe constitué par les caoutchoucs ACM et AEM.

9. Mélange selon l'une quelconque des revendications 1 à 4 ou 6 à 8, **caractérisé en ce que** ledit au moins un caoutchouc réticulable par amine est un caoutchouc ACM, la teneur en polyéthylène-imine est de 0,01 à 10 pcc, de préférence de 0,1 à 5 pcc, de manière particulièrement préférée de 0,15 à 1,2 pcc, de manière tout particulièrement préférée de 0,15 à 0,35 pcc, et la teneur en ladite au moins une diamine, de préférence choisie dans le groupe constitué par l'hexaméthylènediamine (HMD) et le carbamate d'hexaméthylènediamine (HMDC), est de 0,01 à 5 pcc, de préférence de 0,1 à 3 pcc, de manière particulièrement préférée de 0,2 à 1 pcc.

10. Mélange selon l'une quelconque des revendications 1 à 9, **caractérisé en ce que** le mélange contient au moins un support, choisi dans le groupe constitué par les silices neutres, acides et basiques, sur lequel ledit au moins un réticulant est monté et/ou adsorbé.

11. Procédé pour la préparation d'un mélange selon l'une quelconque des revendications 1 à 10 ou 18, **caractérisé en ce que** ledit au moins un caoutchouc réticulable par amine, ledit au moins un réticulant et éventuellement ledit au moins un accélérateur de vulcanisation sont mélangés, de préférence dans une première étape ledit au moins un réticulant et éventuellement ledit au moins un accélérateur de vulcanisation et, dans une deuxième étape, ledit au moins un caoutchouc réticulable par amine est ajouté, de manière particulièrement préférée par étapes, au mélange obtenu après la première étape.

12. Procédé pour la préparation de produits vulcanisés de caoutchouc, **caractérisé en ce qu'**on vulcanise le mélange selon l'une quelconque des revendications 1 à 10 ou 18, de préférence à une température de 100 à 280°C, de manière particulièrement préférée de 150 à 210°C.

13. Produits vulcanisés, pouvant être obtenus par vulcanisation de mélanges selon l'une quelconque des revendications 1 à 10 ou 18 ou selon le procédé selon la revendication 12.

14. Articles en caoutchouc, de préférence joints d'étanchéité, flexibles, membranes et/ou joints toriques, contenant un ou plusieurs produits vulcanisés selon la revendication 13.

15. Véhicule automobile, contenant au moins un article en caoutchouc selon la revendication 14.

16. Utilisation de polyéthylène-imine pour la préparation de mélanges selon l'une quelconque des revendications 1 à 10 ou 18, de produits vulcanisés selon la revendication 13 ou d'articles en caoutchouc selon la revendication 14.

17. Utilisation d'un système de réticulation, constitué par au moins un réticulant et éventuellement au moins un accélérateur de vulcanisation, pour la réticulation d'au moins un caoutchouc réticulable par amine, **caractérisée en ce que** le système de réticulation est constitué, à raison de ≥ 80% en poids, de préférence à raison de ≥ 90% en poids, de manière particulièrement préférée à raison de ≥ 95% en poids, de manière tout particulièrement préférée à raison de ≥ 99% en poids, par rapport à la masse totale du système de réticulation, par au moins un réticulant, ledit au moins un réticulant contenant de la polyéthylène-imine et éventuellement au moins une diamine, de préférence choisie dans le groupe constitué par l'hexaméthylènediamine (HMD) et le carbamate d'hexaméthylènediamine (HMDC) et la teneur totale en accélérateurs de vulcanisation diphénylguanidine (DPG), di-ortho-toluylguanidine (DOTG) et 1-(ortho-toluyl)biguanide du système de réticulation étant d'au maximum 0,4 pcc, de préférence d'au maximum 0,2 pcc, de manière particulièrement préférée d'au maximum 0,1 pcc et de manière tout particulièrement préférée d'au maximum 0,01 pcc, par rapport audit au moins un caoutchouc réticulable par amine.

18. Mélange selon l'une quelconque des revendications 1 à 4 ou 6 à 8 ou 10, **caractérisé en ce que** ledit au moins un caoutchouc réticulable par amine est un caoutchouc AEM, la teneur en polyéthylène-imine est de 0,01 à 10 pcc, de préférence de 0,1 à 5 pcc, de manière particulièrement préférée de 0,15 à 1,2 pcc, et la teneur en ladite au moins une diamine, de préférence choisie dans le groupe constitué par l'hexaméthylènediamine (HMD) et le carbamate d'hexaméthylènediamine (HMDC), est de 0,01 à 5 pcc, de préférence de 0,1 à 3 pcc, de manière particulièrement préférée de 1 à 3 pcc.
